(19) Europäisches Patentamt
European Patent Office
Office européen des brevets

(11) **EP 1 324 188 A2**

(12) **EUROPÄISCHE PATENTANMELDUNG**

(43) Veröffentlichungstag:
02.07.2003 Patentblatt 2003/27

(51) Int Cl.7: **G06F 7/72**

(21) Anmeldenummer: 02102820.4

(22) Anmeldetag: 19.12.2002

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(30) Priorität: **29.12.2001 DE 10164416**

(71) Anmelder:
• **Philips Intellectual Property & Standards GmbH 20099 Hamburg (DE)**
Benannte Vertragsstaaten:
**DE**

• **Koninklijke Philips Electronics N.V. 5621 BA Eindhoven (NL)**

(72) Erfinder: **Feuser, Markus, Dr. 52088, Aachen (DE)**

(74) Vertreter: **Volmer, Georg, Dipl.-Ing. et al Philips Intellectual Property & Standards GmbH, Postfach 50 04 42 52088 Aachen (DE)**

(54) **Verfahren zum Multiplizieren zweier Faktoren aus dem Galois-Feld sowie Multiplizierer zum Durchführen des Verfahrens**

(57) Beschrieben wird ein Verfahren zum Multiplizieren zweier Faktoren aus dem Galois-Feld GF ($2^{m*p}$), wobei jeder der Faktoren als ein Vektor von p Teilblökken mit einer Breite von m Bit darstellbar ist und p, m positive, ganze Zahlen größer als 1 sind, mit den Schritten:

a) Wahl eines Reduktionspolynoms, umfassend ein führendes, von Null verschiedenes Bit sowie p folgende Teilblöcke zu je m Bits, von denen die r niedrigstwertigen Teilblöcke zu je m Bits beliebig ungleich dem Nullvektor und die übrigen Teilblöcke zu Null gewählt werden und r eine positive, ganze Zahl kleiner als p ist, sowie Bereitstellen der r niedritigen Teilblöcke des Reduktionspolynoms in einem ersten Register,
b) multiplikative Verknüpfung eines Teilblockes des ersten Faktors, beginnend mit dem höchstwertigen Teilblock des ersten Faktors, mit nacheinander allen Teilblöcken des zweiten Faktors, beginnend mit dem höchstwertigen Teilblock des zweiten Faktors,
c) stellenrichtiges Aufakkumulieren aller Zwischenergebnisse der multiplikativen Verknüpfungen der Teilblöcke des ersten und des zweiten Faktors gemäß einer Exklusiv-Oder-Funktion ohne Übertrag,
d) dabei nach jeder multiplikativen Verknüpfung eines Teilblockes des ersten Faktors mit einem Teilblock des zweiten Faktors, spätestens nach dem Aufakkumulieren der Zwischenergebnisse der multiplikativen Verknüpfungen eines Teilblocks des ersten Faktors mit allen Teilblöcken des zweiten Faktors, Durchführen einer Reduktion des ggf. aufakkumulierten Zwischenergebnisses auf eine Breite von m Bit mit Hilfe des Reduktionspolynoms unter Anwendung folgender Schritte:

d1) Bereitstellen des zu reduzierenden Zwischenergebnisses,
d2) Bereitstellen wenigstens eines Teilblocks des Reduktionspolynoms,
d3) Multiplizieren des Reduktionspolynoms mit den höchstwertigen m Bits des ggf. aufakkumulierten zu reduzierenden Zwischenergebnisses, wodurch ein zu subtrahierendes Polynom erhalten wird, bei dem die Wertigkeit des höchstwertigen Bits mit der Wertigkeit des höchstwertigen Bits des zu reduzierenden Zwischenergebnisses übereinstimmt,
d4) Subtrahieren des zu subtrahierenden Polynoms vom zu reduzierenden Zwischenergebnis und Bereitstellen des Ergebnisses dieser Subtraktion als neues, zu reduzierendes Zwischenergebnis,
d5) wiederholtes Durchrühren der Schritte d1) bis d4), bis das zu reduzierende Zwischenergebnis eine Breite von m aufweist.

Beschrieben wird ferner ein Multiplizierer zur Durchführung des Verfahrens. Damit lassen sich Einsparungen in Stromverbrauch, Kristalloberfläche und Rechenzeit erzielen.

FIG. 1

**Beschreibung**

Die Erfindung bezieht sich auf ein Verfahren zum Multiplizieren zweier Faktoren aus dem Galois-Feld GF ($2^{m*p}$), wobei jeder der Faktoren als ein Vektor von p Teilblöcken mit einer Breite von m Bit darstellbar ist und p, m positive, ganze Zahlen größer als 1 sind. Die Erfindung bezieht sich ferner auf einer Multiplizierer zum Durchführen dieses Verfahrens.

Elliptische Kurven haben sich als geeignet für die Ausführung von kryptographischen Methoden mit öffentlichen Schlüsseln erwiesen. Die Vorteile elliptischer Kurven bei der Kryptographie liegen darin, dass bei vergleichbarer Sicherheit die Längen öffentlicher Schlüssel wesentlich kürzer gehalten werden können als die Längen von Schlüsseln bei der Anwendung der sogenannten RSA-Methode. Dadurch läßt sich Speicherplatz sparen und der Datendurchsatz bei der Verschlüsselung erhöhen, da dieser Durchsatz im allgemeinen mit wachsender Schlüssellänge abnimmt.

Aus der internationalen Patentanmeldung WO 96/30828 ist ein Finit-Feld-Multiplizierer für ein Feld GF2mn bekannt, der aus einem Paar m-zelligsr Schieberegister und einer m-zelligen Akkumulationszelle gebildet ist. Dieser Multiplizierer umfaßt logische Verbindungen zur Erzeugung gruppierter Terme in den jeweiligen Zellen der Akkumulationszelle auf Retention des Vektors der Subfeldelemente in jedem Schieberegister. Jede Zelle enthält ein Subfeldelement in der Form von einer Anzahl von n Subzellen, die jede eine Binärziffer speichern. Die logischen Verknüpfungsn führen arithmetische Operationen durch in Übereinstimmung mit der inhärenten Subfeldarithmetik, um ein Subfeldelement aus n Binärziffern in jeder Zelle des Akkumulationsregisters zu erzeugen. Durch diesen Multiplizierer soll ein Produkt zweier Vektoren in einer Anzahl von m Taktzyklen erhalten werden können. Durch Abbildungen zwischen einzelnen Registern kann die Quadrierung eines Vektors innerhalb eines Taktzyklus erhalten werden.

Bei einer Multiplikation zweier dualer Zahlen entsteht ein Resultat doppelter Länge, d.h. doppelter Bitzahl. Bei einer Multiplikation von Zahlen großer Länge, wie sie für die Verschlüsselung benötigt werden, treten somit Resultate sehr großer Längen auf, die sehr viel Speicherplatz benötigen.

Die Multiplikation von Elementen aus dem Galois-Feld unterscheidet sich von der Multiplikation ganzer, dualer Zahlen in der Weise, dass bei der Multiplikation ganzer Zahlen in herkömmlichen Mikroprozessoren ein Restklassenring benutzt wird, wohingegen es sich bei dem Galois-Feld um einen mathematischen Körper handelt. Eine Multiplikation in dem Galois-Feld kann auf normaler und auf polynomialer Basis durchgeführt werden. Letztere ist auch Grundlage der Funktionsweise des in der internationalen Patentanmeldung WO 96/30828 dargestellten Multiplizierers. Eine solche Multiplikation auf polynomialer Basis, im folgenden kurz als polynomiale Multiplikation bezeichnet, ist auf herkömmlichen Mikroprozessoren nur sehr ineffektiv und zeitaufwendig auszuführen. Wird zudem eine solche polynomiale Multiplikation in einem Verschlüsselungsverfahren sehr häufig benötigt, führt dies zu einer unerwünschten Verzögerung der Durchführung des Verschlüsselungsverfahrens.

Die Erfindung hat die Aufgabe, ein Verfahren und einen Multiplizierer zu schaffen, durch die die genannte polynomiale Multiplikation schnell und effektiv mit geringstmöglichem Aufwand an Speicherplatz durchgeführt werden kann.

Zur Lösung dieser Aufgabe enthält das erfindungsgemäße Verfahren zum Multiplizieren zweier Faktoren aus dem Galois-Feld die folgenden Schritte:

a) Wahl eines Reduktionspolynoms, umfassend ein führendes, von Null verschiedenes Bit sowie p folgende Teilblöcke zu je m Bits, von denen die r niedrigstwertigen Teilblöcke zu je m Bits beliebig ungleich dem Nullvektor und die übrigen Teilblöcke zu Null gewählt werden und r eine positive, ganze Zahl kleiner als p ist, sowie Bereitstellen der r niedritigen Teilblöcke des Reduktionspolynoms in einem ersten Register,

b) multiplikative Verknüpfung eines Teilblockes des eisten Faktors beginnend mit dem höchstwertigen Teilblock des ersten Faktors, mit nacheinander allen Teilblökken des zweiten Faktors, beginnend mit dem höchstwertigen Teilblock des zweiten Faktors,

c) stellenrichtiges Aufakkumulieren aller Zwischenergsbnisse der multiplikativen Verknüpfungen der Teilblöcke des ersten und des zweiten Faktors gemäß einer Exklusiv-Oder-Funktion oder Übertrag.

d) dabei nach jeder multiplikativen Verknüpfung eines Teilblockes des ersten Faktors mit einem Teilblock des zweiten Faktors, spätestens nach dem Aufakkumulieren der Zwischenergabnisse der multiplikativen Verknüpfungen eines Teilblocks des ersten Faktors mit allen Teilblöcken des zweiten Faktors, Durchführen einer Reduktion des gegebenenfalls aufakkumulierten Zwischenergebnisses auf eine Breite von m Bit mit Hilfe des Reduktionspolynoms unter Anwendung folgender Schritte:

d1) Bereitstellen des zu reduzierenden Zwischenergebnisses,

d2) Bereitstellen wenigstens eines Teilblocks des Reduktionspolynoms,

d3) Multiplizieren des Reduktionspolynoms mit den höchstwertigen m Bits des gegebenenfalls aufakkumulierten zu reduzierenden Zwischenergebnisses, wodurch ein zu subtrahierendes Polynom erhalten wird, bei dem die Wertigkeit des höchstwertigen Bits mit der Wertigkeit des höchstwertigen Bits des zu reduzierenden Zwischenergebnisses übereinstimmt,

d4) Subtrahieren des zu subtrahierenden Polynoms vom zu reduzierenden Zwischenergebnis und Bereitstellen des Ergsbnisses dieser Subtraktion als neues, zu reduzierendes Zwschenergsbnis,

d5) wiederholtes Durchführen der Schritte d1) bis d4), bis das zu reduzierende Zwischenergsbnis eine Breite von m aufweist.

Ein erfindungsgemäßer Multiplizierer zum Multiplizieren zweier Faktoren aus dem Galois-Feld GF ($2^{mxp}$), wobei jeder der Faktoren als ein Vektor von p Teilblöcken mit einer Breite von m Bit darstellbar ist und p, m positive, ganze Zahlen größer als 1 sind, umfaßt

- eine Speichereinheit zum Speichern der zu multiplizierenden Faktoren der r niedrigstwertigsn Teilblöcke eines Reduktionspolynoms, die je m Bit umfassen, wobei r eine positive, ganze Zahl kleiner als p ist, sowie eines reduzierten Endergebnisses der Multiplikation der Faktoren,
- eine m*m-Bit-Multiplizierstufe zum multiplikativen Verknüpfen je zweier der Teilblöcke der Faktoren miteinander und zum Ausgeben eines Multiplikationsergebnisses mit einer Breite von 2m Bit,
- einen ersten und einen zweiten Teilblockspeicher zum Speichern und Bereitstellen je eines der miteinander multiplikativ zu verknüpfenden Teilblöcke,
- einen ersten Zwischenergebnisspeicher zum Speichern wenigstens eines Zwischenergsbnisses,
- eine erste Exklusiv-Oder-Verknüpfungsstufe zum Verknüpfen der m höchstvwrtigsn Bits jedes Multiplikationsergebnisses gemäß einer Exklusiv-Oder-Funktion mit einem stellenrichtig ausgewählten Zwischenergebnis aus dem ersten Zwischenergebnisspeicher und mit einem über eine erste Multiplexerstufe ausgewählten Element,
- eine zweite Exklusiv-Oder-Verknüpfungsstufe zum Verknüpfen der m niedrigstwertigen Bits jedes Multiplikationsergebnisses gemäß einer Exklusiv-Oder-Funktion mit einem über eine zweite Multiplexerstufe ausgewählten Element,
- einen zweiten Zwischenergebnisspeicher zum Speichern eines von der zweiten Exklusiv-Oder-Verknüpfungsstufe abgegebenen Verknüpfungsergebnisses,
- einen Reduktionspolynomspeicher zum Speichern und Bereitstellen der r niedrigstwertigen Teilblöcke des Reduktionspolynoms,
- ein Ausgangsregister zum Zwischenspeichern eines von der ersten oder der zweiten Exklusiv-Oder-Verknüpfungsstufe abgegebenen Verknüpfungsergebnisses als Teilblock des der Speichereinheit zuzuführenden, reduzierten Endergebnisses der Multiplikation der Faktoren,
- eine dritte Multiplexerstufe zum Zuführen des von der ersten oder zweiten Exklusiv-Oder-Verknüpfungsstufe abgegebenen Verknüpfungsergebnisses oder eines ausgewählten Teilblocks aus der Speichereinheit wahlweise an den Reduktionspolynomspeicher, den ersten Zwischenergebnisspeicher oder das Ausgangsregister,

- eine vierte Multiplexerstufe zum wahlweisen Zuführen eines Teilblocks des Reduktionspolynoms aus dem Reduktionspolynomspeicher oder eines Teilblocks des zweiten Faktors aus der Speichereinheit an den zweiten Teilblockspeicher
- sowie ein Steuerwerk zum Steuern der vorgsnannten Bestandteile des Multiplizierers nach einem vorgegebenen Funktionsablauf,
- wobei von der ersten Multiplexerstufe und der zweiten Multiplexerstufe jeweils zwischen dem aktuellen Verknüpfungsergebnis vom zweiten Zwischenergebnisspeicher und einem Nullvektor gleicher Breite ausgewählt wird.

In einer vorteilhaften Ausgestaltung weist der erfindungsgemäße Multiplizierer das Merkmal auf, dass ein Eingang eines für das von der eisten Exklusiv-Oder-Verknüpfungsstufe abgegebene Verknüpfungsergebnis bemessenen Speicherabschnitts unmittelbar mit einem Ausgang der ersten Exklusiv-Oder-Verknüpfungsstufe und ein Ausgang dieses Speicherabschnitts mit einem Eingang einer fünften Multiplexetstufe verbunden ist, über welche fünfte Multiplexerstufe wahlweise das von der ersten Exklusiv-Oder-Verknüpfungsstufe abgegebene Verknüpfungsergebnis oder ein anderes Zwischenergebnis aus dem ersten Zwischenergebnisspeicher der ersten Exklusiv-Oder-Verknüpfungsstufe zugeführt wird.

Das erfindungsgemäße Verfahren beruht auf einer polynomialen Multiplikation; der erfindungsgemäße Multiplizieter ist ein polynomialer Multiplizieter für n*n Bits, wobei n sich als Produkt der Parameter p und m ergibt. Vorzugsweise kann ein solcher Multiplizierer in einer mikroprozessorgesteuerten Anordnung zur Verschlüsselung bzw. Entschlüsselung von Daten einem Mikroprozessor herkömmlicher Bauweise als externes Element beigegeben werden, durch welches die während der Verschlüsselung bzw. Entschlüsselung vorzunehmenden Multiplikationen von Faktoren aus dem Galois-Feld außerhalb des Mikroprozessors durchgeführt werden können. Dadurch läßt sich eine wesentliche Beschleunigung der Verschlüsselungs- bzw. Entschlüsselungsvorgänge erreichen. Durch die laufend durchgeführte Reduktion mit Hilfe des Reduktionspolynoms wird gleichzeitig Speicherplatz eingespart. Als Kernelement des erfindungsgemäßen Multiplizierers dient dabei die m*m-Bit-Multiplizierstufe, auch als kombinatorisches Netzwerk bezeichnet. Die Ergebnisse der einzelnen Multiplikationsschritte, insgesamt p*p an der Zahl, werden durch den erfindungsgemäßen Multiplizierer im Galois-Feld durch die Exklusiv-Oder-Verknüpfungsstufen aufsummiert.

Fig. 1    zeigt ein erstes Ausführungsbeispiel eines erfindungsgsmäßen Multiplizierers, und

Fig. 2      zeigt eine Abwandlung des Ausführungsbeispiels nach Fig. 1, wobei übereinstimmende Elemente mit denselben Bezugszeichen versehen sind.

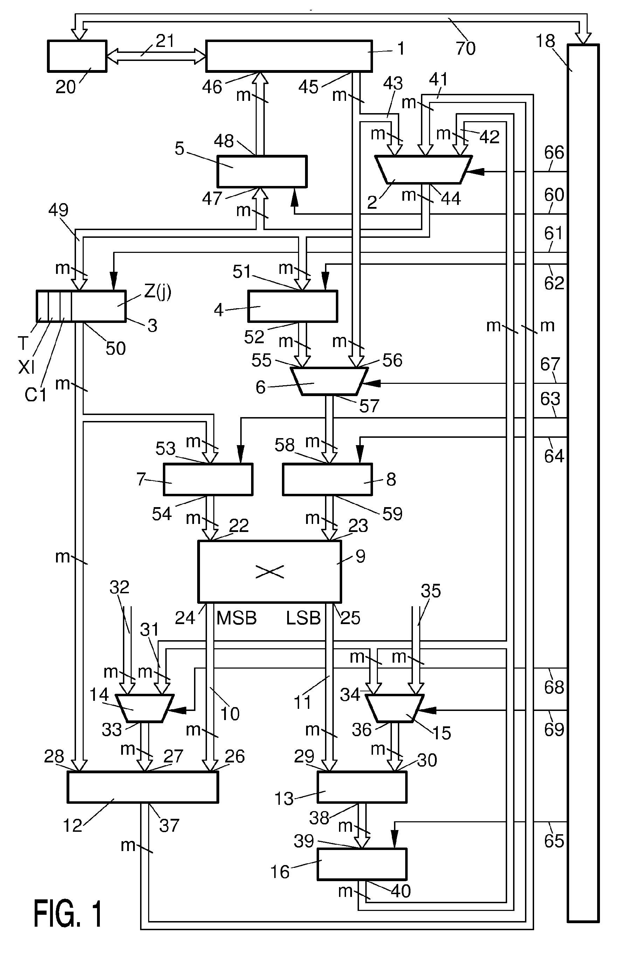

Fig. 1 zeigt ein erstes Ausführungsbeispiel eines erfindungsgemäßen, polynomialen Multiplizierers zum Multiplizieren zweier als binäre Zahlen X und Y dargestellter Faktoren, die je eine Breite von n Bits aufweisen. Dieser erfindungsgemäße, polynomiale Multiplizierer arbeitet eigenständig, d.h. ohne Programmsteuerung durch einen Mikroprozessor herkömmlicher Bauweise, dem der Multiplizierer als externes Element beigegeben ist, sondern umfaßt vielmehr ein eigenes Steuerwerk 18 zum Steuern des Multiplizierers nach einem vorgegebenen Funktionsablauf. Die von diesem Multiplizierer durchgeführte polynomiale Multiplikation wird auf der Grundlage einer polynomiellen Basis durchgeführt. Dabei wird in einzelnen Rechenschritten mit Teilblöcken X(p), X(p-1),..., X(1) des Faktors X und Y(p), Y(p-1),..., Y(1) des Faktors Y gerechnet, wobei diese Teilblöcke eine Breite von je m Bits aufweisen und die Breite n der Faktoren X, Y ein gemäß einem Faktor p ganzzahliges Vielfaches der Breite m ist mit p = n/m. In einem bevorzugten Beispiel ist:

$$n = 192 \text{ Bit}, \quad m = 32 \text{ Bit}, \quad p = 6$$

In dem erfindungsgemäßen Multiplizierer wird eine Reduktion des Ergebnisses der ausgeführten polynomialen Multiplikation auf eine Breite von n Bits automatisch durchgeführt, wofür ein Reduktionspolynom verwendet wird, wie im folgenden noch näher erläutert werden wird.

In Fig. 1 ist mit dem Bezugszeichen 1 eine Speichereinheit bezeichnet, die vorzugsweise als RAM mit einer Wortbreite von m Bits ausgebildet ist, d.h. darin abgespeicherte Daten sind in Teilblöcken zu je m Bits zusammengefaßt. Über eine Verbindung 21 steht die Speichereinheit 1 mit einer Zentralprozessoreinheit 20, auch als CPU bezeichnet, im Datenund/oder Programmaustausch. Durch die Zentralprozessoreinheit 20 kann ein Programm zur Verarbeitung von Daten ausgsführt werden, die in der Speichereinheit 1 gespeichert sind. Für die Multiplikation zweier Faktoren aus dem Galois-Feld wird jedoch nicht die Zentralprozessoreinheit 20 herangezogen. Vielmehr ist dazu die Speichereinheit 1 unmittelbar mit der im nachfolgenden beschriebenen Anordnung verbunden.

Als zentrales Element umfaßt diese Anordnung eine m*m-Bit-Multiplizierstufe 9 zum multiplikativen Verknüpfen je zweier Teilblöcke mit der Breite m-auch als Wortbreite m bezeichnet -, die an zwei Eingängen 22, 23 der Multiplizierstufe 9 zugeführt werden. Das Multiplikationsergebnis steht an zwei Ausgängen 24, 25 der Multiplizierstufe 9 zur Verfügung Dabei werden die höhersignifikanten Bits MSB am ersten Ausgang 24 und

die niedrigersignifikanten Bits LSB am zweiten Ausgang 25 der Multiplizierstufe 9 abgegeben. Auch die Ausgänge 24, 25 der Multiplizierstufe 9 weisen eine Wortbreite von m Bits auf. Jedes dieser Multiplikationsergebnisse der gesamten Bereite von 2m Bits ist nur einer von einer Gesamtanzahl von p*p Beiträgen, welche zum Endergebnis der polynomialen Multiplikation aufzusummieren sind. Dieses Aufsummieren erfolgt, wie noch erläutert werden wird, im vorliegenden Ausführungsbeispiel des erfindungsgemäßen Multiplizierers durch Exklusiv-Oder-Verknüpfungsstufen.

Die Eingänge 22, 23 der Multiplizierstufe 9 sind mit einem ersten Teilblockspeicher 7 bzw. einem zweiten Teilblockspeicher 8 verbunden. In den Teilblockspeichern 7, 8 werden die Teilblöcke der Wortbreite m gsspeichert und bereitgsstellt, die in der Multiplizierstufe 9 multiplikativ miteinander zu verknüpfen sind. Der erste Ausgang 24 der Multiplizierstufe 9 ist über eine Leitung 10 für die höhersignifikanten Bits MSB mit einem ersten Eingang 26 einer ersten Exklusiv-Oder-Verknüpfungsstufe 12 verbunden. Der zweite Ausgang 25 der Multiplizierstufe 9 für die niedrigersignifikanten Bits LSB ist über eine Leitung 11 mit einem eisten Eingang 29 einer zweiten Exklusiv-Oder-Verknüpfungsstufe 13 verbunden. Diese Exklusiv-Oder-Verknüpfungsstufen 12, 13 werden für die auszuführende polynomiale Multiplikation als Addierer verwendet.

Ein zweiter Eingang 27 der ersten Exklusiv-Oder-Verknüpfungsstufe 12 ist mit einem Ausgang 33 einer ersten Multiplexerstufe 14 verbunden. Auch diese Verbindung ist für eine Wortbreite von m Bits bemessen. Ein zweiter Eingang 30 der zweiten Exklusiv-Oder-Verknüpfungsstufe 13 ist über eine für eine Wortbreite m Bits ausgslegte Verbindung mit einem Ausgang 36 einer zweiten Multiplexerstufe 15 verbunden. Ein Ausgang 38 der zweiten Exklusiv-Oder-Verknüpfungsstufe 13 ist mit einem Eingang 39 eines zweiten Zwischenergebnisspeichers 16 verbunden. Auch diese Verbindung ist für eine Wortbreite von m Bits ausgelegt. Im zweiten Zwischenergebnisspeicher 16 wird das Verknüpfungsergebnis von der zweiten Exklusiv-Oder-Verknüpfungsstufe 13 zwischengsspeichert und steht an einem Ausgang 40 des zweiten Zwischenergsbnisspeichers 16 zur Verfügung Vom Ausgang 40 des zweiten Zwischenergebnisspeicheis 16 führt eine Verbindung für eine Wortbreite m Bits zu einem ersten Eingang 31 der ersten Multiplexerstufe 14 und zu einem ersten Eingang 34 der zweiten Multiplexerstufe 15. Einem zweiten Eingang 32 der ersten Multiplexerstufe 14 und einem zweiten Eingang 35 der zweiten Multiplexerstufe 15 wird je ein Nullvektor zugsführt, d.h. eine Anzahl von m zu Null gesetzter Bits. Über die Multiplexerstufen 14, 15 kann je nach durchzuführender Rechenoperation den zweiten Eingängen 27 bzw. 30 der Exklusiv-Oder-Verknüpfungsstufen 12 bzw. 13 das Zwischenergebnis aus dem zweiten Zwischenergebnisspeicher 16 von dessen Ausgang 40 oder der genannte Nullvektor zugeführt werden.

Ein Ausgang 37 der ersten Exklusiv-Oder-Verknüpfungsstufe 12 ist über eine Verbindung mit einer Wortbreite von m Bits mit einem ersten Eingang 41 einer dritten Multiplexerstufe 2 verbunden. Ein zweiter Eingang 42 der dritten Multiplexerstufe 2 ist mit dem Ausgang 40 des zweiten Zwischenergebnisspeichers 16 verbunden. Ein dritter Eingang 43 der dritten Multiplexerstufe 2 ist mit einem Datenausgang 45 der Speichereinheit 1 verbunden. Die vorgenannten Verbindungen sind ebenfalls in einer Wortbreite von m Bits ausgelegt.

Von einem Ausgang 44 der dritten Multiplexerstufe 2 bestehen Verbindungen der Wortbreite von m Bits zu einem Eingang 47 eines Ausgangsregisters 5, zu einem Eingang 49 eines ersten Zwischenergebnisspeichers 3 und zu einem Eingang 51 eines Reduktionspolynomspeichers 4. Das Ausgangsregister 5 dient zum Zwischenspeichern eines Verknüpfungsergebnisses, welches wahlweise von der eisten oder der zweiten Exklusiv-Oder-Verknüpfungsstufe 12 bzw. 13 über die dritte Multiplexerstufe 2 zugeführt wird. Dieses Verknüpfungsergebnis wird über das Ausgangsregister 5 und dessen Ausgang 48 einem Dateneingang 46 der Speichereinheit 1 als Teilblock des reduzierten Endergebnisses der Multiplikation der Faktoren des Galois-Feldes zugeleitet. Über die Verbindung zwischen dem Datenausgang 45 der Speichereinheit 1 und dem dritten Eingang 43 der dritten Multiplexerstufe 2 kann der vorbeschriebenen Verbindung am Ausgang 44 der dritten Multiplexerstufe 2 wahlweise auch ein ausgewählter Teilblock aus der Speichereinheit 1 zugeleitet werden. Die der dritten Multiplexerstufe 2 zugeführten Signale können wahlweise im ersten Zwischenergebnisspeicher 3, im Reduktionspolynomspeicher 4 oder im Ausgangsregister 5 zwischengespeichert weiden.

Von einem Ausgang 50 des ersten Zwischenergebnisspeichers 3 führt je eine Verbindung mit einer Wortbreite von m Bits an einen dritten Eingang 28 der ersten Exklusiv-Oder-Verknüpfungsstufe 12 und an einen Eingang 53 des eisten Teilblockspeichers 7. Ein Ausgang 54 des ersten Teilblockspeichers 7 ist über eine Verbindung für eine Wortbreite von m Bits mit dem ersten Eingang 22 der Multiplizierstufe 9 verbunden.

Von einem Ausgang 52 des Reduktionspolynomspeichers 4 ist eine Verbindung für eine Wortbreite von m Bits an einen ersten Eingang 55 einer vierten Multiplexerstufe 6 geführt. Ein zweiter Eingang 56 der vierten Multiplexerstufe 6 ist über eine Verbindung mit einer Wortbreite von m Bits an den Datenausgang 45 der Speichereihheit 1 angeschlossen. Ein Ausgang 57 der vierten Multiplexerstufe 6 ist mit einem Eingang 58 des zweiten Teilblockspeichers 8 ebenfalls über eine Verbindung mit einer Wortbreite von m Bits verbunden. Ein Ausgang 59 des zweiten Teilblockspeichers 8 ist über eine Verbindung mit einer Wortbreite von m Bits an den zweiten Eingang 23 der Multiplizierstufe 9 angeschlossen.

Zur Steuerung der von der beschriebenen Anordnung durchzuführenden Datenverarbeitungsschritte ist das Steuerwerk 18 vorgesehen, welches über Steuerleitungen 60 bis 65 mit dem Ausgangsregister 5, dem ersten Zwischenergebnisspeicher 3, dem Reduktionspolynomspeicher 4, dem ersten Teilblockspeicher 7, dem zweiten Teilblockspeicher 8 bzw. dem zweiten Zwischenergebnisspeicher 16 verbunden ist. Über die Steuerleitungen 60 bis 65 werden den genannten Stufen Speicherbefehle zugeleitet. Das Steuerwerk 18 ist ferner über je eine Steuerleitung 66 bis 69 mit der dritten Multiplexerstufe 2, der vierten Multiplexerstufe 6, der ersten Multiplexerstufe 14 bzw. der zweiten Multiplexerstufe 15 verbunden. Über die Steuerleitungen 66 bis 69 werden den Multiplexerstufen 2, 6, 14 bzw. 15 Auswahlsignale zugeführt, mit denen das wahlweise Durchschalten jeweils eines der Eingänge dieser Multiplexerstufen 2, 6, 14 bzw. 15 auf ihre Ausgänge vorgenommen wird. Über eine Befehlsleitung 70 ist das Steuerwerk 18 mit der Zentralprozessoreinheit 20 verbunden. Über diese Befehlsleitung 70 kann von der Zentralprozessoreinheit 20 ein Befehl zur eigenständigen Durchführung der Multiplikation an das Steuerwerk 18 gegeben werden. Außerdem kann über die Befehlsleitung 70 vom Steuerwerk 18 eine Statusinformation an die Zentralprozessoreinheit 20 geleitet werden, z.B. eine Fertigmeldung each Beendigung der Multiplikation.

Der erste Zwischenergsbnisspeicher 3 ist zum Abspeichern sowohl von Zwischenergebnissen von p Teilblöcken in einem in Fig. 1 symbolisch dargestellten, mit Z(j) bezeichneten Teilbereich des Zwischenergsbnisspeichers 3 als auch zum Abspeichern dreier weiterer Datenworte bzw. Teilblöcke eingerichtet, die in ebenfalls in Fig. 1 symbolisch dargestellten, mit T, XI bzw. C1 bezeichneten Teilbereichen des Zwischenergebnisspeichers 3 abgelegt werden. Auf die Bedeutung dieser Teilblöcke für die durchzuführende polynomiale Multiplikation wird im Nachfolgenden noch eingegangen werden.

Aus dem ersten Zwischenergebnisspeicher 3 wird je einer der darin gespeicherten Teilblöcke Z(j), T, XI bzw. C1 über den Ausgang 50 in der Wortbreite von m Bits abgsgsben und sowohl dem ersten Teilblockspeicher 7 an seinem Eingang 53 als auch der ersten Exklusiv-Oder-Verknüpfungsstufe 12 an ihrem dritten Eingang 28 zugeleitet. Im ersten Teilblockspeicher 7 wird der zugsführte Teilblock wie beschrieben zur Verknüpfung in der Multiplizierstufe 9 bereitgestellt. Zum Zuführen des Teilblocks zur Multiplizierstufe 9 dient die beschriebene Verbindung des Ausgang 54 des ersten Teilblockspeichers 7 mit dem ersten Eingang 22 der Multiplizierstufe 9 mit der Wortbreite von m Bits.

Die Speichereinheit 1 ist als Register ausgsführt, bevorzugt als RAM, mit einem Speicherplatz von mindestens $(2p + r) \cdot m$ Bits Dabei ist p die Anzahl der Teilblöcke mit einer Breite von je m Bit, die den Vektor bilden, als der jeder der zu multiplizierenden Faktoren aus dem Galois-Feld GF $(2^{m \cdot p})$ darstellbar ist, und p, m sind positive, ganze Zahlen größer als 1. Die Zahl r ist die Anzahl der niedrigstwertigen Teilblöcke des Reduktionspolynoms, die je m Bits beliebig ungleich dem Nullvektor umfassen, wobei r eine positive, ganze Zahl kleiner als p ist. Der erste Zwischenergsbnisspeicher 3 ist ebenfalls als Register ausgeführt, welches einen Speicherplatz von (p + 3)*m Bits aufweist, wobei je m Bits für die mit T, XI bzw. C1 bezeichneten Teilbereiche des Zwischenergsbnisspeichers 3 vorgssehen sind und der Teilbereich Z(j) einen Speicherplatz von p*m Bits umfaßt. Der Reduktionspolynomspeicher 4 wird durch ein Register mit einem Speicherplatz von r*m Bits gebildet. Das Ausgangsregister 5, der erste und der zweite Teilblockspeicher 7 und 8 sowie der zweite Zwischenergebnisspeicher 16 sind je durch ein Register mit einem Speicherplatz von m Bits gebildet.

Der Kern des Multiplizierers gemäß der Erfindung wird durch die m*m-Bit-Multiplizierstufe 9 gebildet. Mit Hilfe dieser m*m-Bit-Multiplizierstufe 9 werden zur vollständigen Multiplikation der zwei Faktoren X und Y insgesamt p*p Beiträge als Produkte von Teilblöcken X(i) und Y(j) in der Form X(i)*Y(j) gebildet, die durch die Exklusiv-Oder-Verknüpfungsstufen 12, 13, die für die auszuführende polynomiale Multiplikation als Addierer verwendet werden, mittels einer Exklusiv-Oder-Funktion aufsummiert werden.

Die Funktionsweise der Schaltungsanordnung nach Fig. 1 ist dabei wie folgt. Durch die Zentralprozessoreinheit 20 werden die beiden zu multiplizierenden Faktoren X und Y sowie das oben erwähnte Reduktionspolynom R in die Speichereinheit 1 geschrieben. Dabei umfaßt das Reduktionspolynom R ein führendes, von Null verschiedenes Bit sowie p folgende Teilblöcke R(p), R(p-1), ..., R(1) zu je m Bits, von denen die r niedrigstwertigen Teilblöcke R(r), R(r-1), ..., R(1) zu je m Bits beliebig ungleich dem Nullvektor und die übrigen Teilblöcke R(p), R(p-1), ..., R(r+1), R(r) zu Null gewählt werden; r ist dabei eine positive, ganze Zahl kleiner als p. Nach diesem Schreibvorgangbefinden sich in der Speichereinheit 1 die folgenden Teilblöcke: X(p), X(p-1), ..., X(2), X(1); Y(p), Y(p-1), ..., Y(2), Y(1); ); R(r), R(r-1), ..., R(2), R(1); mit r kleiner als p und größer oder gleich 1. Diese Teilblöcke können für die folgenden Datenverarbeitungsvorgänge vom polynomialen Multiplizierer unmittelbar, d.h. per direktem Speicherzugriff ("DMA" = "direct memory access"), aus der Speichereinheit 1 ausgelesen werden. Über die Befehlsleitung 70 zwischen dem Steuerwerk 18 und der Zentralprozessoreinheit 20 wird zur Aktivierung des polynomialen Multiplizierers ein Befehl zur eigenständigen Durchführung der Multiplikation an das Steuerwerk 18 gegeben.

Gesteuert durch das Steuerwerk 18 werden dann im polynomialen Multiplizierer gemäß Fig. 1 zunächst die r Teilblöcke R(r), R(r-1), ..., R(2), R(1) des Reduktionspolynoms R in den Reduktionspolynomspeicher 4 geladen. Während das gesamte, wirkliche Reduktionspolynom R stets eine Breite von n+1 Bits aufweist, ist davon in der Speichereinheit 1 und im Reduktionspolynomspeicher 4 nur ein Ausschnitt gespeichert, nämlich die vom Nullvektor verschiedenen r Teilblöcke R(r), R(r-1), ..., R(2), R(1). Dazu wird vom polynomialen Multiplizierer eine führende "1" angenommen, jedoch ist diese führende, (n+1)te Bitstelle nicht explizit in der Speichereinheit 1 oder im Reduktionspolynomspeicher 4 abgespeichert.

Wie vorstehend angsgsben, kann die Anzahl r der vom Reduktionspolynom R zu berücksichtigenden Teilblöcke, nämlich seiner vom Nullvektor verschiedenen r Teilblöcke R(r), R(r-1), ..., R(2), R(1), kleiner als die Anzahl p der Teilblöcke X(i) oder Y(j) der zu multiplizierenden Faktoren X bzw. Y sein. Bevorzugt wird r =1 oder r = 2 gesetzt, d.h. es werden nur ein oder zwei Teilblöcke des Reduktionspolynoms R berücksichtigt. In dem oben angegebenen Dimensionierungsbeispiel sind das 32 oder 64 Bits von einer gesamten Breite von (n+1) = 193 Bits des Reduktionspolynoms R. Der Wert der führenden, (n+1)ten Bitstelle wird zu "1", derjenige der übrigen Bitstellen zu "0" gesetzt.

Im ersten Zwischenergsbnisspeicher 3 werden sowohl die Zwischenergebnisse der folgend dargestellten Berechnung in dem mit Z(j) bezeichneten Teilbereich als auch drei weitere Teilblöcke (auch "Datenworte" genannt) XI, C1 und T in den mit XI, C1 bzw. T bezeichneten Teilbereichen gespeichert. Diese Teilblöcke bzw. Datenworte XI, C1 und T finden bei der Reduktion des Multiplikationsergebnisses Verwendung. Zu Beginn des Multiplikationsvorgangs der Multiplikation der Faktoren X und Y wird der erste Zwischenergebnisspeicher 3 mit "0" initialisiert, d.h. alle in seinen Teilbereichen gespeicherten Werte werden auf "0" gesetzt.

Ein Laufindex i für den Durchlauf aller in der m*m-Bit-Multiplizierstufe 9 miteinander zu multiplizierenden Teilblöcke X(i) des Faktors X wird zu Beginn auf den Wert p gesetzt:

$$i := p$$

Ausgehend von der so festgslegten Anfangssituation wird nun eine Anzahl von p Durchläufen mit den folgenden Rechenschritten durchgeführt:

   1. Lade XI := X(i) aus der Speichereinheit 1 über den Datenausgang 45 und die dritte Multiplexerstufe 2 in den Teilbereich XI des ersten Zwischenergebnisspeichers 3;

   2. Lade XI in den ersten Teilblockspeicher 7;

   3. Setze j:=p;

   4. Lade Y(j) aus der Speichereinheit 1 über den Datenausgang 45 und die vierte Multiplexerstufe 6 in den zweiten Teilblockspeicher 8; an den Ausgängen 24, 25 der m*m-Bit-Multiplizierstufe 9 stehen dann MSB und LSB des Multiplikationsergebnisses X(i)*Y(j) der Teilblöcke X(i) und Y(j) der Faktoren X und Y zu einer weiteren Verarbeitung zur Verfügung;

   5. Addiere das Multiplikationsergebnis X(i)*Y(j) der Teilblöcke X(i) und Y(j) der Faktoren X und Y zum bisherigsn Zwischenergebnis Z(j) aus dem Teilbereich Z(j) des ersten Zwischenergebnisspeichers 3 durch Auf akkumulieren der MSB des Multiplikationsergebnisses X(i)*Y(j) im Teilbereich T des ersten Zwischenergebnisspeichers 3 und der LSB des Multiplikationsergebnisses X(i)*Y(j) im zweiten Zwischenergebnisspeicher 16 gemäß der Vorschrift

$$[T,C] := [Z(j),0] + X(i)*Y(j);$$

hierbei werden die erste Exklusiv-Öder-Verknüpfungsstufe 12 für die MSB und die zweite Exklusiv-Oder-Verknüpfungsstufe 13 für die LSB als Addierer verwendet, der zweite Zwischenergebnisspeicher 16 wird gesetzt und die MSB werden über die dritte Multiplexerstufe 2 auf den ersten Zwischenergebnisspeicher 3 geleitet;

6. Vermindere ("dekrementiere") den Laufindex j um 1 gemäß der Vorschrift

$$j := j-1;$$

7. Lade Y(j) aus der Speichereinheit 1 über den Datenausgang 45 and die vierte Multiplexerstufe 6 in den zweiten Teilblockspeicher 8;

8. Falls j < r : Lade XI in den ersten Teilblockspeicher 7; an den Ausgängen 24, 25 der m*m-Bit-Multiplizierstufe 9 stehen dann MSB und LSB des Multiplikationsergebnisses X(i)*Y(j) der Teilblöcke X(i) und Y(j) der Faktoren X und Y zu einer weiteren Verarbeitung zur Verfügung;

9. Addiere das Multiplikationsergebnis X(i)*Y(j) der Teilblöcke X(i) und Y(j) der Faktoren X und Y zum bisherigen Zwischenergebnis Z(j) aus dem Teilbereich Z(j) des ersten Zwischenergebnisspeichers 3 und dem Ergebnis C (LSB) aus dem zweiten Zwischenergebnisspeicher 16 durch Auf akkumulieren der MSB des Multiplikationsergebnisses X(i)*Y(j) im Teilbereich Z(j+1) bzw. im Teilbereich C1 des ersten Zwischenergebnisspeichers 3 und der LSB des Multiplikationsergebnisses X(i)*Y(j) im zweiten Zwischenergebnisspeicher 16; berechne außerdem für den Fall, dass j kleiner oder gleich r ist, das Produkt des Teilblocks R(j) des Reduktionspolynoms R mit dem im Teilbereich T des ersten Zwischenergebnisspeichers 3 gespeicherten Teilblock T, addiere dieses Produkt zu den im Teilbereich C1 bzw. im zweiten Zwischenergebnisspeicher 16 gespeicherten Teilblöcken C1 (MSB) bzw. C (LSB) und akkumuliere das Ergebnis im Teilbereich Z(j+1) des ersten Zwischenergebnisspeichers 3 bzw. im zweiten Zwischenergebnisspeicher 16 (im Fall des Teilblocks C) gemäß der Vorschrift:

Fallsj >r: [Z(j+1),C] := [Z(j)+C,0] +X(i)*Y(j);

Falls j < r oder j = r: [C1,C] := [Z(j)+C,0] + X(i)*Y(j) und

$$[Z(j+1),C] := [C1,C] + T*R(j);$$

hierbei werden die erste Exklusiv-Oder-Verknüpfungsstufe 12 für die MSB und die zweite Exklusiv-Oder-Verknüpfungsstufe 13 für die LSB als Addierer verwendet, der zweite Zwischenergebnisspeicher 16 wird gesetzt, die MSB werden über die dritte Multiplexerstufe 2 auf den eisten Zwischenergebnisspeicher 3 geleitet und setzen dort die Teilbereiche Z(j+1) und C1; für die Berechnung des Produkts T*R(j) wird R(j) aus dem Reduktionspolynomspeicher 4 über die vierte Multiplexerstufe 6 an den zweiten Teilblockspeicher 8 weitergeleitet, während Teilblock T aus dem entsprechenden Teilbereich T des ersten Zwischenergebnisspeichers 3 in den ersten Teilblockspeicher 7 geladen wird; bei diesem Berechnungsschritt sind somit außer der m*m-Bit-Multiplizierstufe 9 noch die erste und die zweite Exklusiv-Oder-Vaknüpfungsstufe 12 und 13, die erste, zweite, dritte und vierte Multiplexerstufe 14, 15, 2 und 6 sowie der zweite Zwischenergebnisspeicher 16 eingebunden;

10. Vermindere ("dekrementiere") den Laufindex j um 1 gemäß der Vorschrift

$$j := j-1;$$

falls j > 0, fahre fort mit Rechenschritt 7.;

11. Speichere den Wert des Ergebnisses C aus dem zweiten Zwischenergebnisspeicher 16 im Teilbereich Z(1) des ersten Zwischenergebnisspeichers 3 gemäß der Vorschrift

$$Z(1) := C$$

ab;

12. Vermindere ("dekrementiere") den Laufindex i um 1 gemäß der Vorschrift

$$i := i-1;$$

falls i > 1, fahre fort mit Rechenschritt 1.;

13. Jetzt gilt für den Laufindex i die Beziehung

$$i = 1;$$

Der letzte Durchlauf der obigen Rechenschritte 1. bis 12. wird gsstartet, wobei jeder jetzt neu berechnete Wert der insgesamt p Teilblöcke Z(j) Teil des gssuchten reduzierten Endergebnisses der polynomialen Multiplikation ist; diese Teilblöcke Z(j) werden zusätzlich zu den unter den Rechenschritten 1. bis 12. beschriebenen Rechenoperationen per direktem Speicherzugriff ("DMA") über das Ausgangsregister 5 an dem Dateneingang der Speichereinheit 1 geleitet und in dieser an vorbestimmten Speicherplätzen abgelegt.

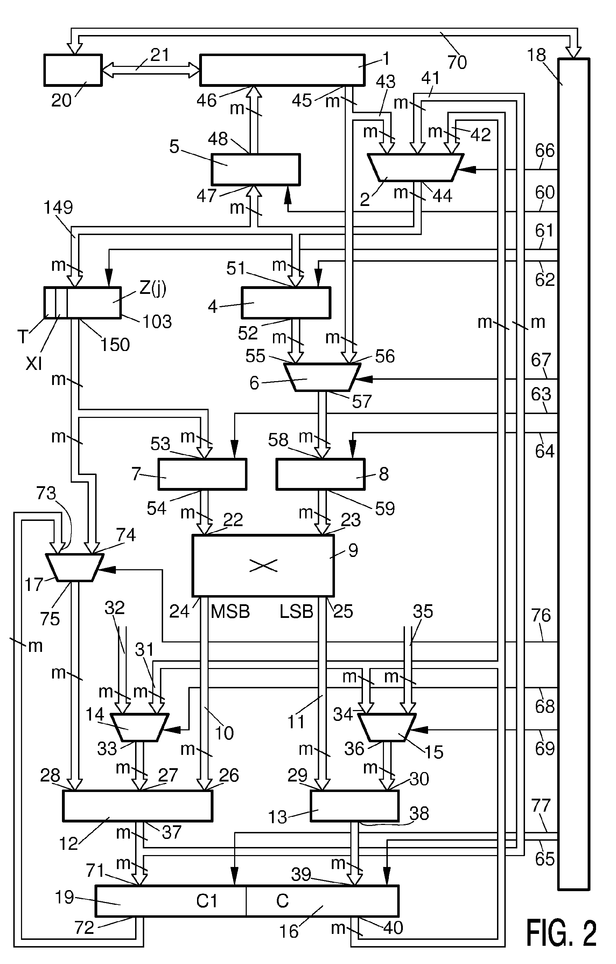

Im Ausführungsbeispiel der Fig. 1 wird im Rechenschritt 9. wie beschrieben ein dort als Teilbereich C1 bezeichneter Speicherbereich des ersten Zwischenergebnisspeichers 3 verwendet. In einem in Fig. 2 dargestellten zweiten Ausführungsbeispiel, welches eine Abwandlung dieses ersten Ausführungsbeispiels bildet, erfolgt eine Speicherung des Teilblocks C1 nicht in einem Teilbereich des ersten Zwischenergebnisspeichers 3, sondern in einem als dritter Zwischenergsbnisspeicher 19 bezeichneten, gesonderten Register mit einem Speicherplatz von m Bits. Der entsprechend abgewandelte, insbesondere um den Teilbereich zur Speicherung des Teilblocks C1 verminderte erste Zwischenergebnisspeicher ist in Fig. 2 mit dem Bezugszeichen 103 bezeichnet; ein Eingang 149 dieses ersten Zwischenergebnisspeichers 103 gemäß der Abwandlung nach Fig. 2 tritt bezüglich seiner Verbindungen mit der übrigen Schaltung an die Stelle des Eingangs 49 des ersten Zwischenergebnisspeichers 3 der Fig. 1. Entsprechend tritt ein Ausgang 150 des ersten Zwischenergebnisspeichers 103 gemäß der Abwandlung nach Fig. 2 bezüglich seiner Verbindungen mit der übrigen Schaltung an die Stelle des Ausgangs 50 des ersten Zwischenergebnisspeichers 3 der Fig. 1.

Der dritte Zwischenergebnisspeicher 19 bildet einen zum Speichern des von der ersten Exklusiv-Oder-Verknüpfungsstufe 12 abgegebenen Verknüpfungsergebnisses C1 bemessenen Speicherabschnitt und weist einen Eingang 71 auf, der über eine für eine Wortbreite von m Bits ausgelegte Verbindung mit dem Ausgang 37 der ersten Exklusiv-Oder-Verknüpfungsstufe 12 verbunden ist. Dem Eingang 71 wird somit unmittelbar das von der ersten Exklusiv-Oder-Verknüpfungsstufe 12 abgegebene Verknüpfungsergebnis zugeführt und darin als Teilblock C1 gespeichert. Ein Ausgang 72 dieses als dritter Zwischenergebnisspeicher 19 bezeichneten Speicherabschnitts ist über eine für eine Wortbreite von m Bits ausgelegte Verbindung mit einem ersten Eingang 73 einer fünften Multiplexerstufe 17 verbunden, die mit einem zweiten Eingang 74 über eine ebenfalls für eine Wortbreite von m Bits ausgelegte Verbindung an den Ausgang 150 des ersten Zwischenergebnisspeichers 103 angeschlossen ist. Ein Ausgang 75 der fünften Multiplexerstufe 17 ist über eine für eine Wortbreite von m Bits ausgelegte Verbindung mit dem dritten Eingang 28 der ersten Exklusiv-Oder-Verknüpfungsstufe 12 verbunden.

Über die fünfte Multiplexerstufe 17 wird wahlweise das von der ersten Exklusiv-Oder-Verknüpfungsstufe 12 abgegebene und im dritten Zwischenergebnisspeicher 19 gespeicherte Verknüpfungsergebnis oder ein anderes Zwischenergebnis aus dem ersten Zwischenergebnisspeicher 103 der ersten Exklusiv-Oder-Verknüpfungsstufe 12 zugeführt. Gesteuert wird dies vom Steuerwerk 18 über eine Steuerleitung 76, über die entsprechende Auswahlsignale vom Steuerwerk 18 an die fünfte Multiplexerstufe 17 übertragen werden. In einer zu der Steuerung des zweitem Zwischenergebnisspeichers 16 analogen Weise werden ferner Speicherbefehle vom Steuerwerk 18 über eine Steuerleitung 77 dem dritten Zwischenergebnisspeicher 19 zum Steuern des Abspeicherns des Teilblocks C1 zugeführt.

Selbstverständlich können der zweite und der dritte Zwischenergebnisspeicher 16, 19 zu einem Register mit einer Breite von 2m Bits zusammengefaßt werden, in dem beide Teilblöcke C und C1 Platz finden.

Die Erfindung hat den Vorteil, dass durch den Einsatz des ersten Zwischenergebnisspeichers (Elemente 3 bzw. 103 in den Ausführungsbeispielen nach Fig. 1 und 2) und des Reduktionspolynomspeichers (Element 4 in den Ausführungsbeispielen nach Fig. 1 und 2) Speicherzugriffe auf die Speichereinheit 1 auf ein Minimum beschränkt werden. Dies wirkt sich einerseits günstig auf den Stromverbrauch des Multiplizierers aus, andererseits ergibt sich eine erhebliche Beschleunigung des gesamten Rechenvorgangs, da Zugriffe auf eine als RAM ausgebildete Speichereinheit (Element 1 in den Ausführungsbeispielen nach Fig. 1 und 2) stets zeitaufwendig sind und somit einen Engpaß bei der Durchführung der Multiplikation darstellen.

Die Erfindung macht sich ferner die Erkenntnis zunutze, dass bei üblichen Reduktionspolynomen (Element R(j) in den Ausführungsbeispielen nach Fig. 1 und 2) auf eine "1" an der Stelle des führenden ((n+1)ten) Bits sehr viele Nullen folgen. Dies wird durch die Erfindung vorteilhaft in der Weise ausgenutzt, als nur eine Anzahl r von insgesamt p Teilblöcken abgespeichert und bei den auszuführenden Rechenschritten berücksichtigt werden Die Einsparung von Speichervorgängen und Rechenschritten wirkt sich sowohl auf den Stromverbrauch als auch auf die Rechenzeit günstig aus Darüber hinaus läßt sich der erfindungsgemäße Multiplizierer entsprechend diesen Einsparungen verkleinern, wodurch bei einer Anordnung als auf einem Halbleiterkristall integrierte Schaltung Kristalloberfläche eingespart werden kann.

Der erfindungsgemäße Multiplizierer läßt sich überdies mit einfachen Registerschaltungen anstelle von Schieberegistern aufbauen. Der erfindungsgemäße Multiplizierer und das erfindungsgemäße Verfahren sind ferner derart ausgebildet, dass bei jedem der Rechenschritte, wie sie z.B. zu dem Ausführungsbeispiel nach Fig. 1 beschrieben sind, nie alle Zwischenergebnisse Z(j) zugleich verändert werden. Dadurch lassen sich nicht nur Spitzen im Stromverbrauch der Schaltungsanordnung des Multipizierers vermeiden, sondern der Stromverbrauch läßt sich insgesamt niedrig halten. Damit wird insbesondere für eine Anwendung in Produkten für die Identifikation - wie z.B. Chipkarten und dgl. - einerseits die Energiebilanz verbessert und andererseits die Störfestigkeit sowie die Sicherheit gegen Ausforschung geheimer Daten erhöht.

BEZUGSZEICHENLISTE

1 Speichereinheit, als Register, bevorzugt als RAM, mit einem Speicherplatz von mindestens (2p + r) *m Bits ausgeführt

2 Dritte Multiplexerstufe

3 Erster Zwischenergebnisspeicher gemäß Fig. 1, als Register ausgeführt mit einem Speicherplatz von (p + 3)*m Bits, wobei je m Bits für die mit T, XI bzw. C1 bezeichneten Teilbereiche des Zwischenergebnisspeichers 3 vorgesehen sind und der Teilbereich Z(j) einen Speicherplatz von p*m Bits umfaßt

4 Reduktionspolynomspeicher, als Register mit einem Speicherplatz von r*m Bits ausgeführt

5 Ausgangsregister zum Zwischenspeichern eines Verknüpfungsergebnisses, als Register mit einem Speicherplatz von m Bits ausgeführt

6 Vierte Multiplexerstufe

7 Erster Teilblockspeicher zum Speichern und Bereitstellen der Teilblöcke der Wortbreite m, die in der Multiplizierstufe 9 miteinander zu verknüpfen sind, als Register mit einem Speicherplatz von m Bits ausgeführt

8 Zweiter Teilblockspeicher zum Speichern und Bereitstellen der Teilblöcke der Wortbreite m, die in der Multiplizierstufe 9 miteinander zu verknüpfen sind, als Register mit einem Speicherplatz von m Bits ausgeführt

9 m*m-Bit-Multiplizierstufe

10 Leitung für die höhersignifikanten Bits MSB zwischen dem ersten Ausgang 24 der Multiplizierstufe 9 und dem ersten Eingang 26 der ersten Exklusiv-Oder-Verknüpfungsstufe 12

11 Leitung für die niedrigersignifikanten Bits LSB zwischen dem zweiten Ausgang 25 der Multiplizierstufe 9 und dem ersten Eingang 29 der zweiten Exklusiv-Oder-Verknüpfungsstufe 13

12 Erste Exklusiv-Oder-Verknüpfungsstufe, wird für die auszuführende polynomiale Multiplikation als Addierer verwendet

13 Zweite Exklusiv-Oder-Verknüpfungsstufe, wird für die auszuführende polynomiale Multiplikation als Addierer verwendet

14 Erste Multiplexerstufe

15 Zweite Multiplexerstufe

16 Zweiter Zwischenergebnisspeicher, als Register mit einem Speicherplatz von m Bits ausgeführt

17 Fünfte Multiplexerstufe

18 Steuerwerk zum Steuern des Multiplizierers nach einem vorgegebenen Funktionsablauf

19 Dritter Zwischenergebnisspeicher zur Speicherung des Teilblocks C1, als gesondertes Register mit einem Speicherplatz von m Bits ausgeführt

20 Zentralprozessoreinheit, auch als CPU bezeichnet

21 Verbindung zwischen Speichereinheit 1 und Zentralprozessoreinheit 20

22 Erster Eingang der Multiplizierstufe mit der Wortbreite m

23 Zweiter Eingang der Multiplizierstufe mit der Wortbreite m

24 erster Ausgang der Multiplizierstufe 9 für die höhersignifikanten Bits MSB mit der Wortbreite m

25 zweiter Ausgang der Multiplizierstufe 9 für die niedrigersignifikanten Bits LSB mit der Wortbreite m

26 Erster Eingang der ersten Exklusiv-Oder-Verknüpfungsstufe 12

27 Zweiter Eingang der ersten Exklusiv-Oder-Verknüpfungsstufe 12

28 Dritter Eingang der ersten Exklusiv-Oder-Verknüpfungsstufe 12

29 Erster Eingang der zweiten Exklusiv-Oder-Verknüpfungsstufe 13

30 Zweiter Eingang der zweiten Exklusiv-Oder-Verknüpfungsstufe 13

31 Erster Eingang der ersten Multiplexerstufe 14

32 Zweiter Eingang der ersten Multiplexerstufe 14 zum Zuführen eines Nullvektors

33 Ausgang der ersten Multiplexerstufe 14

34 Erster Eingang der zweiten Multiplexerstufe 15

35 Zweito- Eingang der zweiten Multiplexerstufe 15 zum Zuführen eines Nullvektors

36 Ausgang der zweiten Multiplexerstufe 15

37 Ausgang der ersten Exklusiv-Oder-Verknüpfungsstufe 12

38 Ausgang der zweiten Exklusiv-Oder-Verknüpfungsstufe 13

39 Eingang des zweiten Zwischenergebnisspeichers 16

40 Ausgang des zweiten Zwischenergebnisspeichers 16

41 Erster Eingang der dritten Multiplexerstufe 2

42 Zweiter Eingang der dritten Multiplexerstufe 2

43 Dritter Eingang der dritten Multiplexerstufe 2

44 Ausgang der dritten Multiplexerstufe 2

45 Datenausgang der Speichereinheit 1

46 Dateneingang der Speichereinheit 1

47 Eingang des Ausgangsregisters 5

48 Ausgang des Ausgangsregisters 5

49 Eingang des ersten Zwischenergebnisspeichers 3

50 Ausgang des ersten Zwischenergebnisspeichers 3

51 Eingang des Reduktionspolynomspeichers 4

52 Ausgang des Reduktionspolynomspeichers 4

53 Eingang des ersten Teilblockspeichers 7

54 Ausgang des ersten Teilblockspeichers 7

55 Erster Eingang der vierten Multiplexerstufe 6

56 Zweiter Eingang der vierten Multiplexerstufe 6

| | |
|---|---|
| 57 | Ausgang der vierten Multiplexerstufe 6 |
| 58 | Eingang des zweiten Teilblockspeichers 8 |
| 59 | Ausgang des zweiten Teilblockspeichers 8 |
| 60 | Steuerleitung für Speicherbefehle zwischen Steuerwerk 18 und Ausgangsregister 5 |
| 61 | Steuerleitung für Speicherbefehle zwischen Steuerwerk 18 und erstem Zwischenergebnisspeicher 3 |
| 62 | Steuerleitung für Speicherbefehle zwischen Steuerwerk 18 und Reduktionspolynomspeicher 4 |
| 63 | Steuerleitung für Speicherbefehle zwischen Steuerwerk 18 und erstem Teilblockspeicher 7 |
| 64 | Steuerleitung für Speicherbefehle zwischen Steuerwerk 18 und zweitem Teilblockspeicher 8 |
| 65 | Steuerleitung für Speicherbefehle zwischen Steuerwerk 18 und zweitem Zwischenergebnisspeicher 16 |
| 66 | Steuerleitung für Auswahlsignale zwischen Steuerwerk 18 und dritter Multiplexerstufe 2 |
| 67 | Steuerleitung für Auswahlsignale zwischen Steuerwerk 18 und der vierten Multiplexerstufe 6 |
| 68 | Steuerleitung für Auswahlsignale zwischen Steuerwerk 18 und der ersten Multiplexerstufe 14 |
| 69 | Steuerleitung für Auswahlsignale zwischen Steuerwerk 18 und der zweiten Multiplexerstufe 15 |
| 70 | Befehlsleitung zwischen Steuerwerk 18 und Zentralprozessoreinheit 20 für z.B. einen Befehl zur eigenständigen Durchführung der Multiplikation an das Steuerwerk 18 oder eine Statusinformation an die Zentralprozessoreinheit 20 |
| 71 | Eingang des dritten Zwischenergebnisspeichers 19 |
| 72 | Ausgang des dritten Zwischenergebnisspeichers 19 |
| 73 | Erster Eingang der fünften Multiplexerstufe 17 |
| 74 | Zweiter Eingang der fünften Multiplexerstufe 17 |
| 75 | Ausgang der fünften Multiplexerstufe 17 |
| 76 | Steuerleitung für Auswahlsignale zwischen Steuerwerk 18 und fünfter Multiplexerstufe 17 |
| 77 | Steuerleitung 77 für Speicherbefehle zwischen Steuerwerk 18 und drittem Zwischenergebnisspeicher 19 |
| 103 | Erster Zwischenergebnisspeicher gemäß Fig. 2; gegenüber dem ersten Zwischenergebnisspeicher 3 nach Fig. 1 um den Teilbereich zur Speicherung des Teilblocks C1 vermindert, d.h. als Register ausgeführt mit einem Speicherplatz von (p + 2)*m Bits, wobei je m Bits für die mit T bzw. XI bezeichneten Teilbereiche des Zwischenergebnisspeichers 103 vorgesehen sind und der Teilbereich Z(j) einen Speicherplatz von p*m Bits umfaßt |
| 149 | Eingang des ersten Zwischenergebnisspeichers 103 gemäß Fig. 2 |
| 150 | Ausgang des ersten Zwischenergebnisspeichers 103 gemäß Fig. 2 |
| C | Teilblock, der im zweiten Zwischenergebnisspeicher 16 gespeichert wird |
| C1 | Teilbereich des ersten Zwischenergebnisspeichers 3; darin bzw. im dritten Zwischenergebnisspeicher 19 gespeicherter Teilblock |
| i | Laufindex; i = 1, ..., p |
| j | Laufindex; j = 1, ..., p |
| LSB | niedrigersignifikante Bits |
| m | Breite jedes der p Teilblöcke, die den Vektor bilden, als der jeder der zu multiplizierenden Faktoren aus dem Galois-Feld GF ($2^{m*p}$) darstellbar ist; m ist positive, ganze Zahl größer als 1 |
| MSB | höhersignifikante Bits |
| n | Breite der zu multiplizierenden Faktoren aus dem Galois-Feld GF ($2^{m*p}$); Produkt der Parameter p und m |
| p | Anzahl der Teilblöcke mit einer Breite von je m Bit, die den Vektor bilden, als der jeder der zu multiplizierenden Faktoren aus dem Galois-Feld GF ($2^{m*p}$) darstellbar ist; p ist positive, ganze Zahl größer als 1 |
| r | Anzahl der niedrigten Teilblöcke des Reduktionspolynoms R, die je m Bits beliebig ungleich dem Nullvektor umfassen; r ist positive, ganze Zahl kleiner als p |
| R | Reduktionspolynom |
| T | Teilbereich des ersten Zwischenergebnisspeichers 3; darin gespeicherter Teilblock |
| X | Mit Y zu multiplizierender Faktor |
| X(i) | Teilblöcke des Faktors X mit einer Breite von je m Bits und i = 1, ..., p |
| XI | Teilbereich des ersten Zwischenergebnisspeichers 3; darin gespeicherter Teilblock |
| Y | Mit X zu multiplizierender Faktor |
| Y(j) | Teilblöcke des Faktors Y mit einer Breite von je m Bits und j=1, ..., p |
| Z(j) | Teilbereich des ersten Zwischenergebnisspeichers 3; darin gespeicherter Teilblock |

**Patentansprüche**

1. Verfahren zum Multiplizieren zweier Faktoren aus dem Galois-Feld GF ($2^{m*p}$), wobei jeder der Faktoren als ein Vektor von p Teilblöcken mit einer Breite von m Bit darstellbar ist and p, m positive, ganze Zahlen größer als 1 sind, <u>**gekennzeichnet durch**</u> folgende Schritte:

   a) Wahl eines Reduktionspolynoms, umfassend ein führendes, von Null verschiedenes Bit sowie p folgende Teilblöcke zu je m Bits, von denen die r niedrigstwertigen Teilblöcke zu je m Bits beliebig ungleich dem Nullvektor und die übrigen Teilblöcke zu Null gewählt werden und r eine positive, ganze Zahl kleiner als p ist, sowie Bereitstellen der r niedrigstwertigen Teilblöcke des Reduktionspolynoms in einem ersten Register,

b) multiplikative Verknüpfung eines Teilblockes des ersten Faktors, beginnend mit dem höchstwertigen Teilblock des ersten Faktors, mit nacheinander allen Teilblöcken des zweiten Faktors, beginnend mit dem höchstwertigen Teilblock des zweiten Faktors,

c) stellenrichtiges Aufakkumulieren aller Zwischenergebnisse der multiplikativen Verknüpfungen der Teilblöcke des ersten und des zweiten Faktors gemäß einer Exklusiv-Oder-Funktion ohne Übertrag,

d) dabei nach jeder multiplikativen Verknüpfung eines Teilblockes des ersten Faktors mit einem Teilblock des zweiten Faktors, spätestens nach dem Aufakkumulieren der Zwischenergebnisse der multiplikativen Verknüpfungen eines Teilblocks des ersten Faktors mit allen Teilblökken des zweiten Faktors, Durchführen einer Reduktion des gegebenenfalls aufakkumulierten Zwischenergebnisses auf eine Breite von m Bit mit Hilfe des Reduktionspolynoms unter Anwendung folgender Schritte:

d1) Bereitstellen des zu reduzierenden Zwischenergebnisses,

d2) Bereitstellen wenigstens eines Teilblocks des Reduktionspolynoms,

d3) Multiplizieren des Reduktionspolynoms mit den höchstwertigen m Bits des gegebenenfalls aufakkumulierten zu reduzierenden Zwischenergebnisses, wodurch ein zu subtrahierendes Polynom erhalten wird, bei dem die Wertigkeit des höchstwertigen Bits mit der Wertigkeit des höchstwertigen Bits des zu reduzierenden Zwischenergebnisses übereinstimmt,

d4) Subtrahieren des zu subtrahierenden Polynoms vom zu reduzierenden Zwischenergebnis und Bereitstellen des Ergebnisses dieser Subtraktion als neues, zu reduzierendes Zwischenergebnis,

d5) wiederholtes Durchführen der Schritte d1) bis d4), bis das zu reduzierende Zwischenergebnis eine Breite von m aufwist.

2. Multiplizierer zum Multiplizieren zweier Faktoren aus dem Galois-Feld GF ($2^{m*p}$), wobei jeder der Faktoren als ein Vektor von p Teilblöcken mit einer Breite von m Bit darstellbar ist und p, m positive, ganze Zahlen größer als 1 sind, **gekennzeichnet durch**

- eine Speichereinheit zum Speichern der zu multiplizierenden Faktoren der r niedrigstwertigen Teilblöcke eines Reduktionspolynoms, die je m Bit umfassen, wobei r eine positive, ganze Zahl kleiner als p ist, sowie eines reduzierten Endergebnisses der Multiplikation der Faktoren,

- eine m*m-Bit-Multiplizierstufe zum multiplikativen Verknüpfen je zweier der Teilblöcke der Faktoren miteinander und zum Ausgeben eines Multiplikationsergebnisses mit einer Breite von 2m Bit,

- einen ersten und einen zweiten Teilblockspeicher zum Speichern und Bereitstellen je eines der miteinander multiplikativ zu verknüpfenden Teilblöcke,

- einen ersten Zwischenergebnisspeicher zum Speichern wenigstens eines Zwischenergebnisses,

- eine erste Exklusiv-Oder-Verknüpfungsstufe zum Verknüpfen der m höchstwertigen Bits jedes Multiplikationsergebnisses gemäß einer Exklusiv-Oder-Funktion mit einem stellenrichtig ausgewählten Zwischenergebnis aus dem ersten Zwischenergebnisspeicher und mit einem über eine erste Multiplexerstufe ausgewählten Element,

- eine zweite Exklusiv-Oder-Verknüpfungsstufe zum Verknüpfen der m niedrigstwertigen Bits jedes Multiplikationsergebnisses gemäß einer Exklusiv-Oder-Funktion mit einem über eine zweite Multiplexerstufe ausgewählten Element,

- einen zweiten Zwischenergebnisspeicher zum Speichern eines von der zweiten Exklusiv-Oder-Verknüpfungsstufe abgegebenen Verknüpfungsergebnisses,

- einen Reduktionspolynomspeicher zum Speichern und Bereitstellen der r niedritigen Teilblöcke des Reduktionspolynoms,

- ein Ausgangsregister zum Zwischenspeichern eines von der ersten oder der zweiten Exklusiv-Oder-Verknüpfungsstufe abgegebenen Verknüpfungsergebnisses als Teilblock des der Speichereinheit zuzuführenden, reduzierten Endergebnisses der Multiplikation der Faktoren,

- eine dritte Multiplexerstufe zum Zuführen des von der ersten oder zweiten Exklusiv-Oder-Verknüpfungsstufe abgegebenen Verknüpfungsergebnisses oder eines ausgewählten Teilblocks aus der Speichereinheit wahlweise an den Reduktionspolynomspeicher, den ersten Zwischenergebnisspeicher oder das Ausgangsregister,

- eine vierte Multiplexerstufe zum wahlweisen Zuführen eines Teilblocks des Reduktionspolynoms aus dem Reduktionspolynomspeicher oder eines Teilblocks des zweiten Faktors aus der Speichereinheit an den zweiten Teilblockspeicher

- sowie ein Steuerwerk zum Steuern der vorgenannten Bestandteile des Multiplizieners nach einem vorgegebenen Funktionsablauf,

- wobei von der ersten Multiplexerstufe und der zweiten Multiplexerstufe jeweils zwischen dem aktuellen Verknüpfungsergebnis vom zweiten Zwischenergebnisspeicher und einem Nullvektor gleicher Breite ausgewählt wird.

3. Multiplizierer nach Anspruch 2, **dadurch gekennzeichnet, dass** ein Eingang eines für das von der ersten Exklusiv-Oder-Verknüpfungsstufe abgegebene Verknüpfungsergebnis bemessenen Speicherabschnitts unmittelbar mit einem Ausgang der ersten Exklusiv-Oder-Verknüpfungsstufe und ein Ausgang dieses Speicherabschnitts mit einem Eingang einer fünften Multiplexerstufe verbunden ist, über welche fünfte Multiplexerstufe wahlweise das von der ersten Exklusiv-Oder-Verknüpfungsstufe abgegebene Verknüpfungsergebnis oder ein anderes Zwischenergebnis aus dem ersten Zwischenergebnisspeicher der ersten Exklusiv-Oder-Verknüpfungsstufe zugeführt wird.

FIG. 1

FIG. 2